# EUROPÄISCHE PATENTSCHRIFT

(11) **EP 3 658 803 B1**
(45) Veröffentlichungstag und Bekanntmachung des Hinweises auf die Patenterteilung: **14.04.2021**
(21) Anmeldenummer: 18739533.0
(22) Anmeldetag: 10.07.2018
(51) Int. Cl.: F16K 1/44

(54) **DOPPELSITZVENTIL MIT MEMBRAN**
DUAL-SEAT VALVE HAVING A DIAPHRAGM
SOUPAPE À DOUBLE SIÈGE AYANT UNE MEMBRANE

(30) Priorität: 25.07.2017 DE 102017007028
(43) Veröffentlichungstag der Anmeldung: 03.06.2020
(73) Patentinhaber: GEA Tuchenhagen GmbH, 21514 Büchen (DE)
(72) Erfinder: BURMESTER, Jens, 23883 Grambek (DE); PIEPLOW, Jörg, 23919 Rondeshagen (DE); TEGTMEYER, Stephanie, 21037 Hamburg (DE)
(74) Vertreter: Hauck Patentanwaltspartnerschaft mbB
(86) Internationale Anmeldenummer: PCT/EP2018/068641
(87) Internationale Veröffentlichungsnummer: WO 2019/020361

(56) Entgegenhaltungen:
- WO-A1-2004/063609
- WO-A1-2013/170931
- DE-A1- 4 203 723
- DE-A1-102007 027 765
- DE-A1-102011 103 371

## Beschreibung

Die Erfindung betrifft ein Doppelsitzventil mit einer Membran nach dem Oberbegriff des ersten Anspruchs.

In der Prozessindustrie sind Doppelsitzventile ein wichtiges Element der Fluidsteuerung. Prozessindustrie meint hier insbesondere die Getränketechnik, Lebensmitteltechnik, Pharmazie und Biochemie. Diese Prozesse stellen hohe Anforderungen an die Hygiene innerhalb der Prozesskomponenten und damit innerhalb der Ventile.

Doppelsitzventile besitzen zwischen einem erstem Anschluss und einem zweiten Anschluss einen zweifach abgedichteten Durchlass. Daher ist ihr Einsatz in vielen hygienischen Prozessen gewünscht. Mit zwei Ventilsitzen wirken zwei Dichtungen zusammen, zwischen denen ein Leckageraum ausgebildet ist. In diesen wird beispielsweise bei Versagen einer Dichtung Fluid aufgefangen, ohne dass es direkt den Durchlass passiert und es zu einem Medienkontakt kommt. Die zweifache Abdichtung erlaubt es, eine der Dichtungen zur Reinigung von Dichtung und zugeordnetem Ventilsitz anzulüften, während die jeweils andere Dichtung in dichtendem Kontakt bleibt. Die sehr gute Reinigbarkeit und die sichere Medientrennung führen zu sehr guten hygienischen Verhältnissen innerhalb des Doppelsitzventils.

In einer Bauform werden Doppelsitzventile als Ventil an einem Behälterauslass eingesetzt und in diesem Zusammenhang als Tankbodenventile bezeichnet.

Beim Tankbodenventil besteht die Schwierigkeit, den Leckageraum zu entleeren, ohne dass es in ihm zu einem Druckaufbau kommt. Die Entleerung erfolgt aufgrund des notwendigen Aufbaues durch eine der Ventilstangen mit denen die Ventilteller bewegt werden, die als Hohlstange ausgeführt ist. Die Entleerung unter Vermeidung von Rückströmung des genutzten Reinigungsmittels in den Ventilinnenraum gelingt nur durch große Strömungsquerschnitte in der Hohlstange, die eines der Schließglieder bewegt. Das ist mit einem großen Außendurchmesser der Hohlstange verbunden.

Beispiele für an diese Anwendungen angepasste Doppelsitzventile sind in der WO 93/16307 A1 und der WO 2004/063609 A1 vorgestellt.

Die WO 93/16307 A1 befasst sich mit der Dimensionierung des Kanals, durch den die Leckage aus dem Leckageraum abläuft. Sie schlägt eine Hohlstange vor, mit dem der Leckageraum zu einem Speicher mit oder ohne steuerbare Entlüftung erweitert wird. Hierdurch soll die Reinigbarkeit verbessert werden.

Die WO 2004/063609 A1 schlägt ein gut reinigbares Tankbodenventil vor, bei dem die Hohlstange unterhalb der einen Dichtung und oberhalb einer Gehäusedurchführung eine Einschnürung aufweist. Hierdurch ist das abhängig angetriebene Verschlussteil weitgehend druckausgeglichen ausgeführt.

Die hygienischen Bedingungen in den Ventilen können mit einer Membran verbessert werden, die den Durchtritt der Ventilstange/Hohlstange durch das Gehäuse vom Innenraum des Ventils in den Außenbereich abdichten. Eine Zentralbohrung der Membran ist an der Hohlstange festgelegt, ein Außenrand der Membran gehäuseseitig gehalten.

Eine Membrandichtung in einem Einsitzventil wird der WO 2013/170931 A1 vorgestellt. In diesem Patentdokument wird die Halterung der Membran an ihrem Außenrand verbessert. Über die Einsitzventile hinaus wurden bereits Doppelsitzventile mit Membrandichtungen zwischen Kopplungselement und Gehäuse ausgestattet. Die vorherrschende Denkrichtung der letzten zehn Jahre bei der Gestaltung eines Doppelsitzventils mit einer Membrandichtung ist aus den Dokumenten DE 20 2006 004 174 U1 und EP 2 734 757 B1 ersichtlich.

Aus DE 42 03 723 A1 ist ein Doppelsitzventil mit zwei seriell angeordneten relativ zueinander bewegbaren Schließgliedern bekannt, die in der Schließstellung des Ventils das Überströmen von Fluiden von einem Ventilgehäuseteil in ein anderes verhindern, und die sowohl in der Schließ- als auch in der Offenstellung einen Leckagehohlraum begrenzen, der mit der Umgebung des Ventils verbunden ist. Konzentrisch ineinander angeordnete Ventilstangen für die Schließglieder sind einseitig aus dem Ventilgehäuse in die Umgebung des Ventils herausgeführt, wobei unter anderem ein möglichst großer Verbindungsweg zwischen dem Leckagehohlraum und der Umgebung des Ventils, ein ortsfester Anschluss des Leckageauslaufs und eine Sicherheitszone zwischen Leckagehohlraum und Umgebung des Ventils erreicht werden sollen.

Aufgabe ist es nun, ein Doppelsitzventil mit Membran zu schaffen, das als Tankbodenventil einsetzbar ist.

Diese Aufgabe wird gelöst von einem Doppelsitzventil mit den Merkmalen des ersten Anspruchs. Die weiteren Ansprüche 2 bis 10 geben vorteilhafte Weiterbildungen dieses Doppelsitzventils an.

Das Doppelsitzventil ist mit einem Gehäuse, welches einen ersten Anschluss, einen zweiten Anschluss und einen zwischen erstem und zweitem Anschluss angeordneten Durchlass mit einer Durchlasswand aufweist, ausgestattet. Es weist einen ersten Ventilteller und einen zweiten Ventilteller auf, welche in einem Ventilinnenraum des Gehäuses angeordnet sind, und hat eine Hohlstange, die mit dem ersten Ventilteller verbunden ist, sowie eine Ventilstange, die mit dem zweitem Ventilteller verbunden und die Hohlstange durchsetzend angeordnet ist. Ein erster Ventilsitz und ein zweiter Ventilsitz sind vorgesehen, sowie ein Antrieb, der zum Betätigen von wenigstens einem Ventilteller eingerichtet ist. Eine Gehäuseöffnung ist dem Antrieb zugewandt. In einer Schließstellung des Doppelsitzventils ist im Durchlass ein Leckageraum ausgebildet, der vom zweiten Ventilteller abgedichtet ist. Die Hohlstange weist einen Leckagekanal auf, welcher eine Fluidverbindung zwischen Leckageraum und einem Gehäuseteil schafft, das durch die Membran vom Ventilinnenraum getrennt ist. Zwischen zweitem Ventilteller und Durchlasswand ist ein Reinigungsspalt mit einem Querschnitt ausbildbar. Der Leckagekanal weist einen Kanalquerschnitt auf, der größer ist als der Querschnitt.

Dieses Doppelsitzventil ist für die Anwendung als Tankbodenventil geeignet, da der Ablauf aus dem Leckageraum durch eine Hohlstange erfolgt, wobei diese

Hohlstange die Membran durchsetzt. Die Querschnittsbedingung verhindert eine Drucküberhöhung im Leckageraum und dem Leckagekanal.

Die Membran ist jedoch ein bestimmendes Element für den erreichbaren Hub und somit für den Fluidfluss, der durch das geöffnete Ventil strömt.

Es ist nun vorgesehen, dass im Durchlass eine Mündungskontur ausgebildet ist, in welcher ein Abschnitt des ersten Ventiltellers in der Schließstellung des Doppelsitzventils wenigstens teilweise aufgenommen ist, und der Abschnitt eine Ausnehmung des ersten Ventiltellers begrenzt, in der der zweite Ventilteller in einer Offenstellung des Doppelsitzventils aufgenommen ist.

Das Ineinanderfahren der Ventilteller wirkt mit der Mündungskontur zusammen, denn ein großer Durchtrittsquerschnitt wird mit einem kleinen Hub der Ventilteller erreicht.

Als zusätzlicher Vorteil des Zusammenwirkens der Ventiltellerkonfiguration mit der Membran können auch Fluide mit Stücken das Doppelsitzventil durchströmen, wobei durch den kleinen Hub und dem nur kleinen notwendigen Abstand der Ventilteller im Vergleich zum Stand der Technik ein geringerer Platzbedarf für Durchlass, Ventilteller und Antrieb besteht. Zudem wird die Membran selbst durch den geringen Hub nur einer geringen mechanischen Beanspruchung ausgesetzt.

Die Gefahr einer Drucküberhöhung des Reinigungsfluides beim Abfließen wird in einer Weiterbildung weiter verringert. Gemäß dieser Weiterbildung ist zwischen erstem Ventilteller und Durchlasswand ein erster Drosselspalt mit einem ersten Spaltquerschnitt ausbildbar und der Reinigungsspalt als zweiter Drosselpalt mit einem zweiten Spaltquerschnitt ausgeführt. Der Leckagekanal weist einen Kanalquerschnitt auf, der größer ist als der größere von erstem und zweitem Spaltquerschnitt. Gegenüber einem Reinigungsspalt ist der Durchtrittsquerschnitt bei einem Drosselspalt kleiner, so dass der erste und/oder der zweite Spaltquerschnitt deutlich kleiner als der Kanalquerschnitt ist, beispielsweise ein Drittel oder ein Viertel so groß. Ein Drosselspalt erhöht zudem den Reinigungseffekt im Bereich von Ventilsitz und Dichtung.

In einer Weiterbildung ist zwischen erstem Ventilteller und Durchlasswand ein erster Drosselspalt mit einem ersten Spaltquerschnitt ausbildbar und der Reinigungsspalt als zweiter Drosselpalt mit einem zweiten Spaltquerschnitt ausgeführt. Der Leckagekanal weist einen Kanalquerschnitt auf, der größer ist als der größere von erstem und zweitem Spaltquerschnitt. Dies verhindert wirksam eine Drucküberhöhung, die zum Aufdrücken des jeweils eigentlich geschlossen bleibenden Ventiltellers führt, und verbessert zudem die Reinigungswirkung im Sitzbereich.

In einer nächsten Weiterbildung ist vorgesehen, dass die Hohlstange in einer Gleitlagerbuchse gelagert ist und eine Außenkontur der Hohlstange mit einer Innenkontur der Gleitlagerbuchse einen Formschluss bildet, der eine Drehung um eine Hubachse verhindert. Dies verringert die Torsionsbelastung der Membran und bedeutet neben einer Erhöhung der Standzeit auch eine Verbesserung der Hygiene durch Verringerung der Kräfte auf Einspannung, da ein Rutschen der Membran in der Einspannstelle verringert wird.

Gemäß einer nächsten Weiterbildung ist ein Innenrand der Membran zwischen der Hohlstange und einem mit der Hohlstange verschraubten Halteelement gehaltert und das Haltelement mittels eine Kontermutter festlegt. Dies ergibt eine sichere Einspannung der Membran, die hygienisch und kostengünstig ist.

In einer anderen Weiterbildung ist der erste Ventilsitz in der Mündungskontur ausgeformt. Dies ergibt einen raumsparenden Aufbau und ein verbessertes Verhältnis aus Durchlass zu Hub. Bei gegebenen Hub kann dadurch der Durchsatz an Fluid durch das Ventil erhöht werden.

Die Schaltleckage des Doppelsitzventils wird verringert und die Hygiene verbessert, indem gemäß Weiterbildung eine mit erstem Ventilteller und erstem Ventilsitz zusammenwirkende erste Dichtung axial dichtend ausgeführt ist.

Die Gefahr einer Drucküberhöhung, die den Schaltzustand des Doppelsitzventils ungünstig beeinflusst, kann zuverlässig verringert werden, indem in einer Weiterbildung der Kanalquerschnitt wenigstens das Dreifache des größeren von erstem und zweitem Spaltquerschnitt beträgt.

Die zentrale Öffnung der ringförmigen Membran kann kleiner ausgeführt und bei festem Außendurchmesser der Membran somit ein größerer Hub realisiert werden, indem auf die Führung der Ventilstange im Bereich der zentralen Öffnung verzichtet wird. Dies gelingt in einer Weiterbildung vorteilhaft, indem ein Führungsmittel vorgesehen ist, welches die Zentrierung vom zweiten Ventilteller relativ zum ersten Ventilteller bewirkt und welches in axialer Richtung zwischen zweitem Ventilteller und Membran angeordnet ist.

In einer nächsten Weiterbildung ist vorgesehen, dass das Führungsmittel an der Ventilstange befestigt und sich im Leckagekanal abstützend angeordnet ist. Dies ergibt eine kostengünstige Herstellung, eine einfache Montage und ein gut reinigbare Vorrichtung.

Die beiden letztgenannten Weiterbildung können weiter verbessert werden, indem das Führungsmittel einen Leckagedurchlass mit einer Durchtrittsfläche, die wenigstens einem kleinsten Kanalquerschnitt des Leckagekanals entspricht, aufweist.

Dies ergibt einen guten Abfluss von Leckage und verhindert dadurch zuverlässig die bereits erwähnte Drucküberhöhung.

Anhand eines Ausführungsbeispiels und seiner Weiterbildungen sollen die Erfindung näher erläutert und die Darstellung der Wirkungen und Vorteile vertieft werden.

Es zeigen:
- Fig. 1:: Schnitt entlang der Hubachse durch ein membrangedichtetes Doppelsitzventil im geschlossenen Zustand;
- Fig. 2:: Schnitt entlang der Hubachse durch ein membrangedichtetes Doppelsitzventil im geöffneten Zustand;
- Fig. 3:: geschnittene Detailansicht des Durchlasses in Reinigungsstellung des ersten Ventiltellers;
- Fig. 4:: geschnittene Detailansicht des Durchlasses in Reinigungsstellung des zweien Ventiltellers;
- Fig. 5:: perspektivischer Anblick eines Führungsmittels.

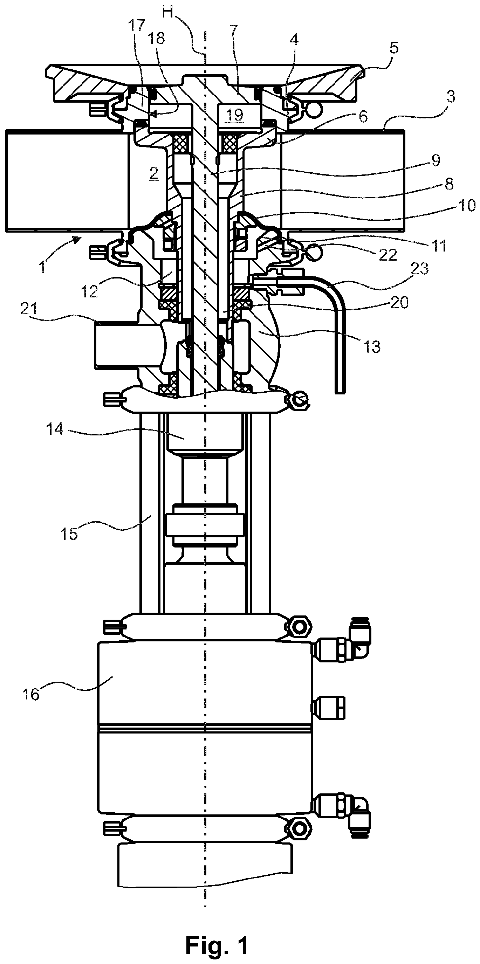

Ein als Tankbodenventil ausgeführtes Doppelsitzventil ist in Fig. 1 teilgeschnitten in seinem geschlossenen Schaltzustand, der Schließstellung, dargestellt. Ein Gehäuse 1 mit einem Ventilinnenraum 2 weist einen ersten Anschluss 3 und einen zweiten Anschluss 4 auf. Der erste Anschluss 3 kann mit einer Rohrleitung verbindbar ausgeführt sein, der zweite Anschluss 4 weist im gezeigten Beispiel einen Tankadapter 5 auf, der mit einem Behälter verbindbar ist. In der Schließstellung ist der Fluidfluss zwischen erstem Anschluss 3 und zweitem Anschluss 4 unterbunden. Zur Beeinflussung des Fluidflusses innerhalb des Doppelsitzventils und durch das Doppelsitzventil hindurch sind im Ventilinnenraum 2 ein erster Ventilteller 6 und ein zweiter Ventilteller 7 beweglich angeordnet.

Mit dem ersten Ventilteller 6 ist eine Hohlstange 8 verbunden, während eine Ventilstange 9 mit dem zweiten Ventilteller 7 verbunden und so angeordnet ist, dass sie die Hohlstange 8 durchsetzt. Hohlstange 8 und die darin bewegliche Ventilstange 9 durchsetzen zusammen eine Membran 10, die eine Gehäuseöffnung 11 abdichtet. Durch Wirkung der Membran 10 ist ein Hohlraum 12 eines Gehäuseteiles 13 vom Ventilinnenraum 2 getrennt. Mit der Membran 10 wird der so genannte Fahrstuhleffekt wird verhindert, gemäß welchem Verunreinigung an einer Stange anhaftet und während der Schaltbewegung eine Dichtung passiert. Hohlstange 8 und Ventilstange 9 durchsetzen Hohlraum 12 und Gehäuseteil 13. Jede von ihnen kann aus mehreren miteinander verbundenen Stangenabschnitten zusammengesetzt sein. Hygienisch vorteilhaft ist es jedoch, auf Teilungen innerhalb des Ventilinnenraumes 2 zu verzichten. Die Hohlstange 8 ist in einer Gleitlagerbuchse 14 gelagert. Auf der in Fluidrichtung dem Inneren des Gehäuseteils 13 zugewandten Seite der Gleitlagerbuchse 14 kann eine Dichtung zum Trennen der Bereichen voneinander vorgesehen sein. Am Gehäuseteil 13 kann eine Laterne 15 befestigt sein, die einen Antrieb 16 trägt. Der Antrieb 16 ist eingerichtet, eine Längsbewegung von Hohlstange 8 und Ventilstange 9 zu bewirken. Die Funktion des Antriebes 16 umfasst mindestens die Möglichkeit, Schließstellung und eine Offenstellung des Doppelsitzventiles durch Bewegung von erstem Ventilteller 6 und zweitem Ventilteller 7 zu bewirken. Vorzugsweise ist der Antrieb 16 ausgelegt, wenigstens einen von erstem Ventilteller 6 und zweitem Ventilteller 7 in eine Sitzreinigungsstellung zu bringen. Der Antrieb 16 kann druckmittelbetrieben, beispielsweise pneumatisch, ausgeführt sein.

Im Gehäuse 1 ist zwischen erstem Anschluss 3 und zweitem Anschluss 4 ein Durchlass 17 mit einer Durchlasswand 18 ausgebildet. Bei geöffnetem Tankbodenventil findet durch diesen Durchlass 17 hindurch der Fluidfluss statt. In der Schließstellung hingegen begrenzen die Durchlasswand 18 sowie erster Ventilteller 6 und zweiter Ventilteller 7 einen Leckageraum 19, so dass dieser im Durchlass 17 ausgebildet und dabei vom zweiten Ventilteller 7 abgedichtet ist. In der Hohlstange 8 ist zwischen Hohlstange 8 und Ventilstange 9 ein Leckagekanal 20 ausgebildet, durch welchen Fluid in Form von Leckage beim Schalten des Doppelsitzventils, bei Dichtungsversagen oder beim Reinigen abfließt. Dieses Fluid verlässt, nachdem es aus dem Leckageraum 19 durch den Leckagekanal 20 geflossen ist und dabei innerhalb der Hohlstange 8 die Membran 10 durchflossen hat, durch einen Auslassstutzen 21 das Gehäuseteil 13.

Sollte die Membran 10 undicht werden, tritt Leckage in den Hohlraum 12 ein. Die Einspannmittel, die einen Außenrand der Membran 10 haltern, können einen Leckagedurchlass 22 aufweisen, der Leckage aus dem Bereich der Einspannung in den Hohlraum 12 abführen. Ein Auslassrohr 23 ist mit dem Hohlraum 12 fluidverbunden, so dass zuverlässig angezeigt wird, wenn die Membran 10 undicht ist und ausgetauscht werden muss.

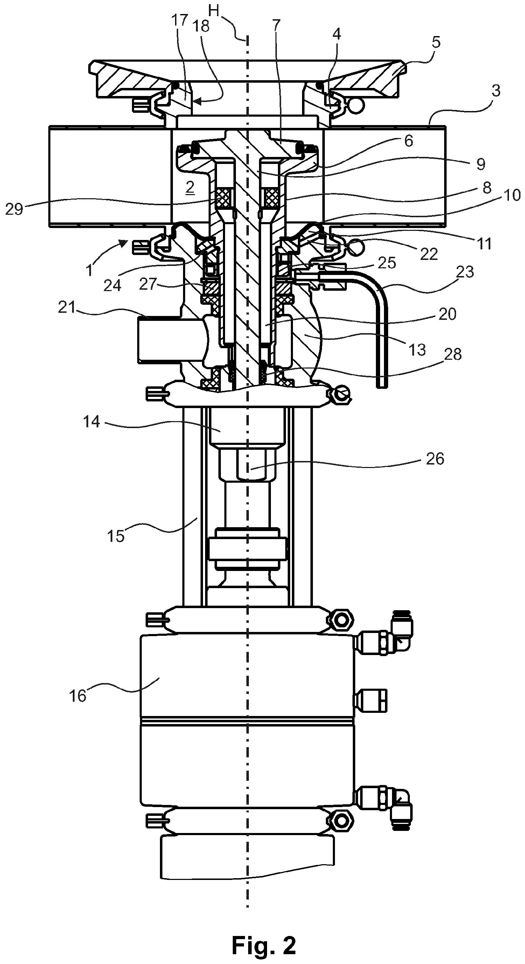

Es zeigt Fig. 2 das Doppelsitzventil im Teilschnitt in offener Stellung, in welcher eine freie Fluidverbindung zwischen erstem Anschluss 3 und zweitem Anschluss 4 hergestellt ist. Die freie Fluidverbindung wird bewirkt, indem erster Ventilteller 6 und zweiter Ventilteller 7 in den Ventilinnenraum 2 zurückgezogen sind und den Durchlass 17 freigeben.

Die Membran 10 weist einen Innenrand auf, der eine zentrale Öffnung begrenzt und an der Hohlstange 8 festgelegt ist. Diese Festlegung wird mittels eines Halteelements 24 bewirkt. Dieses ist mit der Hohlstange 8 verschraubt und durch eine Kontermutter 25 gesichert. Es drückt den Innenrand gegen einen Absatz an der Hohlstange 8. Auf diese Weise ist eine sichere Einspannung der Membran 10 auf eine einfache, verschleißarme und hygienische Weise gewährleistet. Diese kraftschlüssige Festlegung kann zur Erhöhung von Verschleißarmut und hygienischem Zustand durch Formschluss ergänzt werden. Die Membran 10 ist so geformt und die axiale Lage ihrer inneren und äußeren Halterung so gewählt, dass sie im in Fig. 1 gezeigten geschlossenen Zustand des Doppelsitzventils eine Kuppelform frei von Sicken und Falten aufweist. Dadurch ist ein Ablaufen von Flüssigkeit von der Membran 10 gewährleistet, die gewählte Gestaltung verhindert das Auftreten von Pfützen mit Rückständen.

Eine sichere Funktion des Doppelsitzventils, insbesondere die sichere Schließstellung, und lange Lebensdauern der Bauteile sind vorteilhafte Eigenschaften des gezeigten Doppelsitzventils. Zum Erreichen dieser Ziele sind Hohlstange 8 und Ventilstange 9 sicher in ihrer Beweglichkeit geführt, wodurch passgenaue Ausrichtung dieser Bauteile zueinander bewirkt wird. Das wirkt sich vorteilhaft auf Funktion und Lebensdauer aus.

Die Hohlstange 8 ist zum einen in der Gleitlagerbuchse 14 gelagert, die den am nächsten zum Antrieb 16 gelegenen Lagerpunkt darstellt. Die Gleitlagerbuchse 14 kann eine Innenkontur aufweisen, die zusammen mit einer Außenkontur der Hohlstange 8 einen Formschluss bildet, der eine Drehung um eine Hubachse verhindert. Dies kann beispielsweise erreicht werden, indem Innenkontur und Außenkontur von rotationssymmetrischer Form abweichen. Ein solches Mittel ist die ebene Lagerfläche 26 als Teil der Außenkontur, die mit einer zugeordneten ebenen Fläche an der Innenkontur zusammenwirkt. Verhinderung der Drehung der Hohlstange 8 durch den Formschluss reduziert die mechanische Belastung der Membran 10. Die Torsion, die durch eine Verdrehung der inneren gegenüber der äußeren Einspannung der Membran 10 eine mechanische Belastung bewirkt, wird weitgehend verhindert.

Auf der dem Antrieb 16 abgewandten Seite der Gleitlagerbuchse 14 und jenseits des Auslassstutzens 21 gelegen ist ein Gleitlager 27 angeordnet, das eine zweite Lagerstelle für die Hohlstange 8 schafft. Auf der Seite des Gleitlagers 27, die dem Auslassstutzen 21 zugewandt ist, kann eine Dichtung vorgesehen sein, um diese Bereich voneinander zu trennen und das Gleitlager 27 sauber zu halten.

Die Ventilstange 9 ist mittels eines Ventilstangenlagers 28 an einer ersten Stelle gelagert, welche auf der dem Antrieb 16 zugewandten Seite des Auslassstutzens 21 angeordnet ist.

Auf einer Höhe, die in axialer Richtung, d.h. entlang der Hubachse, zwischen zweitem Ventilteller 7 und Membran 10 liegt, befindet sich ein Führungsmittel 29. Dieses Führungsmittel 29 bewirkt eine Führung und Lagerung der Ventilstange 9, so dass Ventilstange 9 und zweiter Ventilteller 7 in räumlichem Bezug zu Hohlstange 8 und erstem Ventilteller 6 ausgerichtet sind. Dadurch wird zudem eine Zentrierung vom zweiten Ventilteller 7 relativ zum ersten Ventilteller 6 bewirkt. Vorteilhaft sind der sich ergebende weite axiale Abstand von Ventilstangenlager 28 und Führungsmittel 29 sowie die Verlagerung des notwendigen Raumbedarfs weg von der Membran 10, so dass deren zentrale Öffnung einen geringen Durchmesser besitzt. Dieser Durchmesser wird nur von der Größe des Leckagekanals 20 und der Wandstärke der Hohlstange 8 bestimmt. Der Verzicht auf Führung und Lagerung an dieser Stelle verringert den Durchmesser. Damit sind eine kleine Membran 10 oder ein größerer Hub möglich, da der Hub vom Außendurchmesser der Membran 10 und dem Durchmesser der zentralen Öffnung abhängt. Das Führungsmittel 29 ist so gestaltet, dass es von Leckage durchströmbar ist.

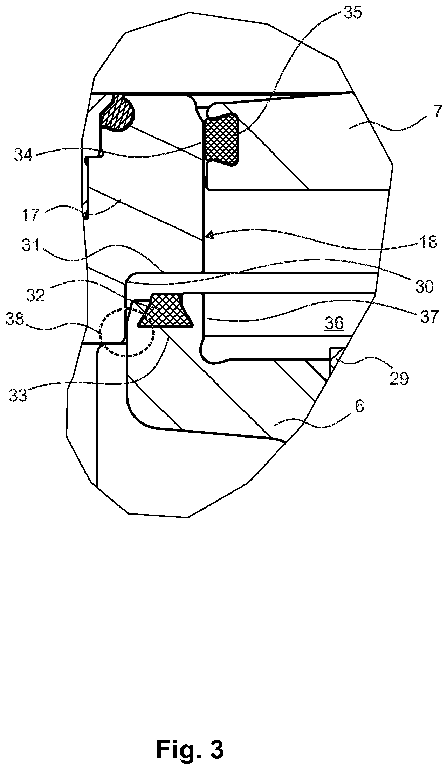

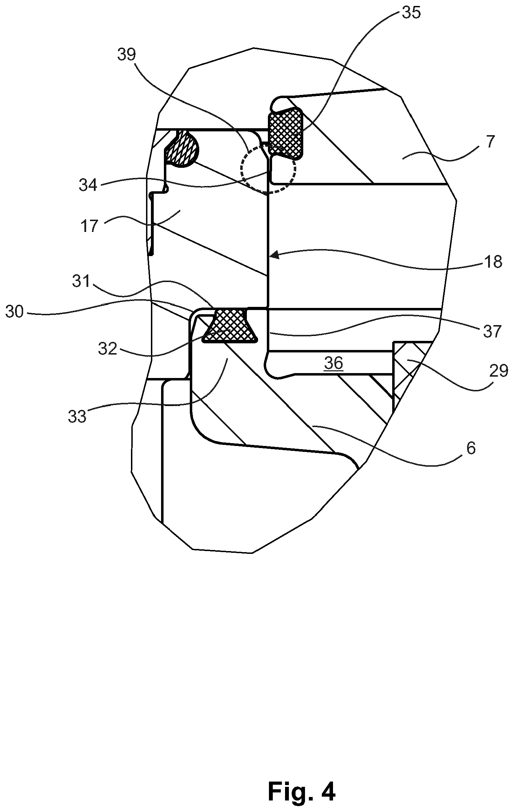

In Fig. 3 und Fig. 4 ist der Durchlass 17 im vergrößerten Ausschnitt dargestellt. Dabei zeigt Fig. 3 den ersten Ventilteller 6 in einer Teilhubstellung, während der zweite Ventilteller 7 sich in Schließstellung befindet. In Fig. 4 hingegen befindet sich der erste Ventilteller 6 in Schließstellung und der zweite Ventilteller 7 sich in Teilhubstellung. Die Teilhubstellungen finden Verwendung bei der Reinigung des Doppelsitzventiles, insbesondere der Ventilsitze.

Im Durchlass 17 ist eine Mündungskontur 30 ausgeformt, die einen ersten Ventilsitz 31 umfasst, welcher mit einer ersten Dichtung 32 in Schließstellung des Doppelsitzventils dichtend zusammenwirkt. Die erste Dichtung 32 kann axial, radial und halbaxial ausgeführt sein. Vorteilhaft ist die erste Dichtung 32 jedoch als axiale Dichtung ausgeführt und an einem Abschnitt 33 des ersten Ventiltellers 6 angeordnet. Die Mündungskontur 30 ist so ausgeformt, dass der erste Abschnitt 33 in Schließstellung des Doppelsitzventils in ihr wenigstens teilweise aufgenommen ist. Der Abschnitt 33 des ersten Ventilteller 6 taucht in der Schließstellung in den Durchlass 17 ein. Die axiale Ausführung der ersten Dichtung 32 erleichtert diese Gestaltung. Die Aufnahme des Abschnitts 33 in der Mündungskontur 30 beziehungsweise das Eintauchen bewirken vorteilhaft bei einem gegebenem Hub des ersten Ventiltellers 6 eine große Durchtrittsfläche zwischen Durchlass 17 und erstem Ventilteller 6 in der Offenstellung des Doppelsitzventils. Der Hub wird stark vom Außendurchmesser und dem Innendurchmesser der Membran 10 bestimmt. Die gezeigte Ausführung der Mündungskontur 30 erlaubt daher mit einer kleinen Membran 10 ein Doppelsitzventil mit großem Flüssigkeitsdurchsatz zu realisieren, beziehungsweise bei gegebenem Flüssigkeitsdurchsatz die Membran 10 zu verkleinern.

In der Durchlasswand 18 ist ein zweiter Ventilsitz 34 ausgeformt, der mit einer zweiten Dichtung 35 in Schließstellung des Doppelsitzventils dichtend zusammenwirkt. Die zweite Dichtung 35 ist radial dichtend ausgeführt und in einer Nut am zweiten Ventilteller 7 aufgenommen. Die radiale Ausführung der zweiten Dichtung 35 wirkt sich in hohem Maße reduzierend auf so genannte Schaltleckage beim Ändern des Schaltzustandes des Doppelsitzventiles aus. Schaltleckage bezeichnet Fluid, das während des Schaltens ungewünscht in den Leckageraum 19 gelangt und dort auch Rückstände bilden kann. Die hier dargestellte Ausführung ist nahezu frei von solcher Schaltleckage, wodurch weniger Rückstände entstehen. Dies vereinfacht die Reinigung und verbessert die hygienischen Bedingungen im Ventil.

Auf der Seite des ersten Ventiltellers 6, die dem zweiten Ventilteller 7 zugewandt ist, ist eine Ausnehmung 36 ausgebildet, die in radialer Richtung vom Abschnitt 33 begrenzt und umgeben ist. Die Innenwandung des Abschnitts 33, die der Ausnehmung 36 zugewandt ist, ist zumindest teilweise als dritter Ventilsitz 37 ausgeformt. Die Abmessungen sind dabei so gewählt, dass der zweite Ventilteller 7 ganz oder wenigstens teilweise in der Ausnehmung 36 aufnehmbar ist. Die Abmessungen sind weiterhin so gewählt, dass die zweite Dichtung 35 mit dem dritten Ventilsitz 37 dichtend zusammenwirkt, wenn der zweite Ventilteller 7 in der Ausnehmung 36 aufgenommen ist, so dass vorteilhaft kostengünstig die zweite Dichtung 35 ausreicht, um in Offenstellung die Ventilteller 6 und 7 gegeneinander und in Schließstellung zweiten Ventilteller 7 und zweiten Ventilsitz 34 gegeneinander abzudichten. Diese Stellung ist in Fig. 2 gezeigt und wird in Offenstellung des Doppelsitzventils vorteilhaft umgesetzt. Die gezeigte Ausführung der Ausnehmung 36 zum Aufnehmen des zweiten Ventiltellers 7 verstärkt den Effekt, mit einer kleinen Membran 10 ein Doppelsitzventil mit großem Flüssigkeitsdurchsatz zu realisieren, beziehungsweise bei gegebenem Flüssigkeitsdurchsatz die Membran 10 zu verkleinern. Die weiter oben beschriebene Anordnung des Führungsmittels 29 bewirkt eine sichere Zentrierung des zweiten Ventiltellers 7 relativ zum ersten Ventilteller 6, so dass die Bewegung des zweiten Ventiltellers 7 in die Ausnehmung 36 hinein sicher ohne Anstoßen und Verkannten erfolgt. Es erlaubt vorteilhaft enge Spaltmaße zwischen Ausnehmung 36 und zweitem Ventilteller 7.

Die Fig. 3 zeigt den ersten Ventilteller 6 in einer angelüfteten Stellung. In dieser ist die erste Dichtung 32 vom ersten Ventilsitz 31 abgehoben, beide wirken nicht mehr dichtend zusammen. Der zweite Ventilteller 7 befindet sich gleichzeitig in einer Stellung, in der die zweite Dichtung 35 mit dem zweiten Ventilsitz 34 dichtend zusammenwirkt. In dieser Stellung sind erster Ventilsitz 31 und erste Dichtung 32 durch Einwirken, insbesondere Anströmen, eines Reinigungsmittels reinigbar. Dieses Reinigungsmittel wird durch den Leckagekanal 20 abgeführt. Damit der Leckagekanal 20 nicht überlastet wird, sich das Reinigungsmittel in Strömungsrichtung vor dem Leckagekanal 20 nicht staut und sich kein Druck zwischen ihm und dem Bereich des ersten Ventilsitzes 31 aufbaut, ist vorteilhaft ein erster Drosselspalt 38 mit einem ersten Spaltquerschnitt zwischen Durchlasswand 18 und erstem Ventilteller 6 ausbildbar und der gezeigten an gelüfteten, ersten Reinigungsstellung ausgebildet.

Eine zweite Reinigungsstellung ist in Fig. 4 gezeigt. In dieser befinden sich erster Ventilsitz 31 und erste Dichtung 32 in dichtendem Kontakt. Durch einen Teilhub des zweiten Ventiltellers 7 ist die zweite Dichtung 35 vom zweiten Ventilsitz 34 getrennt und leicht angelüftet, so dass zwischen zweitem Ventilteller 7 und Durchlasswand 18 ein Reinigungsspalt 39 ausgebildet ist. Auch in diesem Fall ist der Reinigungsspalt 39 so bemessen, dass Stauung und Drucküberhöhung des Reinigungsmittels zwischen dem Reinigungsspalt 39 und dem Leckagekanal 20 verhindert werden.

Vorteilhaft ist der Reinigungsspalt 39 als zweiter Drosselspalt mit einem zweiten Spaltquerschnitt ausgeführt. Die Ausführungsform des Spaltes als Drosselspalt unterscheidet sich von einem Reinigungsspalt in der geeigneten Fläche, die für die Durchströmung mit Fluid geeignet ist und dem Querschnitt des Spaltes entspricht. Bei einem Reinigungsspalt ist dieser Querschnitt kleiner als ein Kanalquerschnitt des Leckagekanals 20. Bei einem Drosselspalt ist der Querschnitt hingegen deutlich kleiner als der Kanalquerschnitt. Der Querschnitt eines Drosselspaltes beträgt ein Drittel des Kanalquerschnitts, oft auch ein Viertel oder weniger. Der Drosselspalt hat einen größeren Einfluss auf die Strömungsgeschwindigkeit des Reinigungsmittels mit der Zielsetzung, eine kinetische Reinigungswirkung auf den zugeordneten Ventilsitz zu erzeugen. Ausbildbar bedeutet im Zusammenhang mit erstem Drosselspalt 38 und Reinigungsspalt 39, dass der Spalt wenigstens in einer Hubstellung des ersten Ventiltellers 6 beziehungsweise des zweiten Ventiltellers 7 existiert, in der Regel aber nicht in allen Hubstellungen der Ventilteller 6 und 7 besteht.

Die Stauung von Reinigungsmittel wird sicher verhindert, indem der Kanalquerschnitt des Leckagekanals 20, vorzugsweise der kleinste Kanalquerschnitt über die Erstreckung des Leckagekanals 20, größer als der größere von erstem und zweitem Spaltquerschnitt gewählt wird.

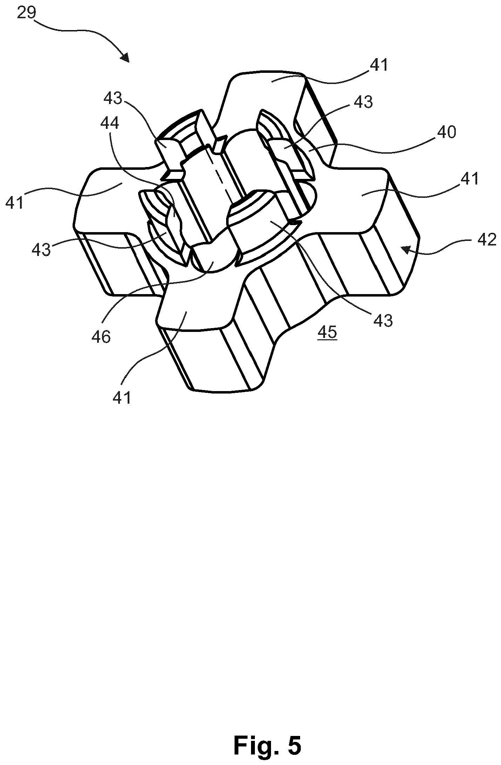

Das Führungsmittel 29 ist in Fig. 5 in einer perspektivischen Ansicht dargestellt.

Das Führungsmittel 29 umfasst einen Ring 40, dessen zentrale Öffnung im eingebauten Zustand des Führungsmittels 29 von der Ventilstange 9 durchsetzt ist. Am Umfang des Ringes 40 ist wenigstens ein sich in radialer Richtung erstreckender Zahn 41 vorgesehen ist. An der dem Ring 40 abgewandten und radial außen liegenden Seite des Zahnes 41 ist eine Stützfläche 42 vorgesehen, die in gleitendem Kontakt mit der Wandung des Leckagekanals 20 steht, wodurch sich das Führungsmittel 29 und damit mittelbar die Ventilstange 9 gleitend in der Hohlstange 8 abstützen.

In axialer Richtung ist am Ring 40 wenigstens ein Fortsatz 43 angebracht. Der Fortsatz 43 ist elastisch verformbar und weist einen Vorsprung 44 auf, der mit einer Ausnehmung an der Ventilstange 9, beispielsweise eine Nut, im Eingriff steht. Dies ist eine vorteilhafte kostengünstige und leicht montierbare Befestigung des Führungsmittels 29 an der Ventilstange 9.

Da das Führungsmittel 29 im Leckagekanal 20 innerhalb der Hohlstange 8 eingebaut ist und dieser Leckagekanal 20 von Reinigungsmittel durchströmbar sein soll, weist das Führungsmittel 29 einen Leckagedurchlass 45 auf. Der Leckagedurchlass 45 umfasst den Zwischenraum zwischen Ring 40 und Zahn 41. Zusätzlich kann auf der Innenseite des Ringes 40 eine Einbuchtung 46 oder eine Mehrzahl über den inneren Umfang des Ringes 40 verteilte Einbuchtungen 46 vorgesehen sein. Die Summe der einzelnen Öffnungsflächen der Einbuchtungen 46 und der Zahnzwischenräume ergeben die Durchtrittsfläche des Leckagedurchlasses 45. Diese Durchtrittsfläche ist so bemessen, dass sie wenigstens dem kleinsten Kanalquerschnitt des Leckagekanals 20 entspricht. Dies verhindert Stauung des abfließenden Reinigungsmittels und Druckaufbau innerhalb des Leckagekanals 20. Die Bestandteile des Leckagedurchlasses können Bohrungen, Ausnehmungen, Freidrehungen und ähnliches sein. Alternativ oder zusätzlich kann die Herstellung des Führungsmittels 29 ein Gießvorgang umfassen.

### Bezugszeichenliste

- 1: Gehäuse
- 2: Ventilinnenraum
- 3: erster Anschluss
- 4: zweiter Anschluss
- 5: Tankadapter
- 6: erster Ventilteller
- 7: zweiter Ventilteller
- 8: Hohlstange
- 9: Ventilstange
- 10: Membran
- 11: Gehäuseöffnung
- 12: Hohlraum
- 13: Gehäuseteil
- 14: Gleitlagerbuchse
- 15: Laterne
- 16: Antrieb
- 17: Durchlass
- 18: Durchlasswand
- 19: Leckageraum
- 20: Leckagekanal
- 21: Auslassstutzen
- 22: Leckagedurchlass
- 23: Auslassrohr
- 24: Halteelement
- 25: Kontermutter
- 26: Lagerfläche
- 27: Gleitlager

- 28: Ventilstangenlager
- 29: Führungsmittel
- 30: Mündungskontur
- 31: erster Ventilsitz
- 32: erste Dichtung
- 33: Abschnitt
- 34: zweiter Ventilsitz
- 35: zweite Dichtung
- 36: Ausnehmung
- 37: dritter Ventilsitz
- 38: erster Drosselspalt
- 39: Reinigungsspalt
- 40: Ring
- 41: Zahn
- 42: Stützfläche
- 43: Fortsatz
- 44: Vorsprung
- 45: Leckagedurchlass
- 46: Einbuchtung
- H: Hubachse

## Patentansprüche

1. Doppelsitzventil mit einem Gehäuse (1), welches einen ersten Anschluss (3), einen zweiten Anschluss (4) und einen zwischen erstem Anschluss (3) und zweitem Anschluss (4) angeordneten Durchlass (17) mit einer Durchlasswand (18) aufweist, mit einem erstem Ventilteller (6) und einem zweiten Ventilteller (7), welche in einem Ventilinnenraum (2) des Gehäuses (1) angeordnet sind, mit einer Hohlstange (8), die mit dem ersten Ventilteller (6) verbunden ist, mit einer Ventilstange (9), die mit dem zweitem Ventilteller (7) verbunden und die Hohlstange (8) durchsetzend angeordnet ist, mit einem erstem Ventilsitz (31) und einem zweiten Ventilsitz (34), mit einem Antrieb (16), der zum Betätigen von wenigstens einem Ventilteller (6, 7) eingerichtet ist, mit einer dem Antrieb (16) zugewandten Gehäuseöffnung (11), mit einem in einer Schließstellung des Doppelsitzventils im Durchlass (17) ausgebildeten Leckageraum (19), der vom zweitem Ventilteller (7) abgedichtet ist, und die Hohlstange (8) einen Leckagekanal (20) aufweist, welcher eine Fluidverbindung zwischen Leckageraum (19) und einem Gehäuseteil (13) schafft, und zwischen zweitem Ventilteller (7) und Durchlasswand (18) ein Reinigungsspalt (39) mit einem Querschnitt ausbildbar ist und der Leckagekanal einen Kanalquerschnitt aufweist, der größer als der Querschnitt ist, wobei im Durchlass (17) eine Mündungskontur (30) ausgebildet ist, in welcher ein Abschnitt (33) des ersten Ventiltellers (6) in der Schließstellung des Doppelsitzventils wenigstens teilweise aufgenommen ist, und der Abschnitt (33) eine Ausnehmung (36) des ersten Ventiltellers (6) begrenzt, in der der zweite Ventilteller (7) in einer Offenstellung des Doppel sitzventil s wenigstens teilweise aufgenommen ist, **dadurch gekennzeichnet, dass** die Gehäuseöffnung (11) mit einer Membran (10) gedichtet ist, welche das Gehäuseteil (13) vom Ventilinnenraum (2) trennt.

2. Doppelsitzventil nach Anspruch 1, **dadurch gekennzeichnet, dass** zwischen erstem Ventilteller (6) und Durchlasswand (18) ein erster Drosselspalt (38) mit einem ersten Spaltquerschnitt ausbildbar ist und der Reinigungsspalt (39) als zweiter Drosselpalt mit einem zweiten Spaltquerschnitt ausgeführt ist und der Leckagekanal (20) einen Kanalquerschnitt aufweist, der größer ist als der größere von erstem und zweitem Spaltquerschnitt.

3. Doppelsitzventil nach Anspruch 1 oder 2, **dadurch gekennzeichnet, dass** die Hohlstange (8) in einer Gleitlagerbuchse (14) gelagert ist und eine Außenkontur der Hohlstange (8) mit einer Innenkontur der Gleitlagerbuchse (14) einen Formschluss bildet, der eine Drehung um eine Hubachse verhindert.

4. Doppelsitzventil nach einem der vorhergehenden Ansprüche, **dadurch gekennzeichnet, dass** ein Innenrand der Membran (10) zwischen der Hohlstange (8) und einem mit der Hohlstange (8) verschraubten Halteelement (24) gehaltert ist und eine Kontermutter (25) das Halteelement (24) festlegt.

5. Doppelsitzventil nach einem der vorhergehenden Ansprüche, **dadurch gekennzeichnet, dass** der erste Ventilsitz (31) in der Mündungskontur (30) ausgeformt ist.

6. Doppelsitzventil nach einem der vorhergehenden Ansprüche, **dadurch gekennzeichnet, dass** eine mit erstem Ventilteller (6) und erstem Ventilsitz (31) zusammenwirkende erste Dichtung (32) axial dichtend ausgeführt ist.

7. Doppelsitzventil nach einem der vorhergehenden Ansprüche, **dadurch gekennzeichnet, dass** der Kanalquerschnitt wenigstens das Dreifache des größeren von erstem und zweitem Spaltquerschnitt beträgt.

8. Doppelsitzventil nach einem der vorhergehenden Ansprüche, **dadurch gekennzeichnet, dass** ein Führungsmittel (29) vorgesehen ist, welches die Zentrierung vom zweiten Ventilteller (7) relativ zum ersten Ventilteller (6) bewirkt und welches in axialer Richtung zwischen zweitem Ventilteller (7) und Membran (10) angeordnet ist.

9. Doppelsitzventil nach Anspruch 8, **dadurch gekennzeichnet, dass** das Führungsmittel (29) an der Ventilstange (9) befestigt und sich im Leckagekanal (20) abstützend angeordnet ist.

10. Doppelsitzventil nach Anspruch 8 oder 9, **dadurch gekennzeichnet , dass** das Führungsmittel (29) einen Leckagedurchlass (45) mit einer Durchtrittsfläche, die wenigstens einem kleinsten Kanalquerschnitt des Leckagekanals (20) entspricht, aufweist.

## Claims

1. A double-seat valve comprising a housing (1), which has a first connection (3), a second connection (4) and a passage (17) that is arranged between the first connection (3) and second connection (4) and has a passage wall (18), comprising a first valve disk (6) and a second valve disk (7), which are arranged in a valve interior space (2) of the housing (1), comprising a hollow rod (8), which is connected to the first valve disk (6), comprising a valve rod (9), which is connected to the second valve disk (7) and is arranged to pass through the hollow rod (8), comprising a first valve seat (31) and a second valve seat (34), comprising a drive (16) which is configured to actuate at least one valve disk (6, 7), comprising a housing opening (11) facing the drive (16), comprising a leakage space (19) which is formed in the passage (17) in a closed position of the double-seat valve and which is sealed off by the second valve disk (7), and the hollow rod (8) has a leakage channel (20), which creates a fluid connection between the leakage space (19) and a housing part (13), and a cleaning gap (39) having a cross-section can be formed between the second valve disk (7) and the passage wall (18), and the leakage channel has a channel cross-section which is greater than the cross-section, wherein in the passage (17) an opening contour (30) is formed, in which a section (33) of the first valve disk (6) is at least partly received when the double-seat valve is in the closed position, and the section (33) delimits a cut-out (36) in the first valve disk (6), in which the second valve disk (7) is at least partly received in an open position of the double-seat valve, **characterized in that** the housing opening (11) is sealed with a diaphragm (10) which separates the housing part (13) from the valve interior space (2).

2. The double-seat valve according to claim 1, **characterized in that** a first choke gap (38) having a first gap cross-section can be formed between the first valve disk (6) and the passage wall (18), and the cleaning gap (39) is designed as a second choke gap having a second gap cross-section, and the leakage channel (20) has a channel cross-section which is greater than the larger of the first and second gap cross-sections.

3. The double-seat valve according to claim 1 or 2, **characterized in that** the hollow rod (8) is mounted in a plain bearing bush (14) and produces a keyed fit between an outer contour of the hollow rod (8) and an inner contour of the plain bearing bush (14), thus preventing rotation about a lift axis.

4. The double-seat valve according to one of the preceding claims, **characterized in that** an inner edge of the diaphragm (10) is held between the hollow rod (8) and a holding element (24) screwed to the hollow rod (8), and a lock nut (25) secures the holding element (24).

5. The double-seat valve according to one of the preceding claims, **characterized in that** the first valve seat (31) is formed in the opening contour (30).

6. The double-seat valve according to one of the preceding claims, **characterized in that** a seal (32) that cooperates with the first valve disk (6) and the first valve seat (31) is designed to be axially sealing.

7. The double-seat valve according to one of the preceding claims, **characterized in that** the channel cross-section is at least three times the size of the larger of the first and second gap cross-sections.

8. The double-seat valve according to one of the preceding claims, **characterized in that** a guiding means (29) is provided which centers the second valve disk (7) relative to the first valve disk (6) and which is arranged between the second valve disk (7) and the diaphragm (10) in the axial direction.

9. The double-seat valve according to claim 8, **characterized in that** the guiding means (29) is fastened to the valve rod (9) and is arranged in a supportive manner in the leakage channel (20).

10. The double-seat valve according to claim 8 or 9, **characterized in that** the guiding means (29) comprises a leakage passage (45) having a through-flow area that corresponds at least to the smallest channel cross-section of the leakage channel (20).

## Revendications

1. Soupape à double siège avec un boîtier (1) présentant un premier raccord (3), un deuxième raccord (4) et un passage (17) avec une paroi de passage (18), lequel est disposé entre le premier raccord (3) et le deuxième raccord (4), avec une première tête de soupape (6) et une deuxième tête de soupape (7), lesquelles sont disposées dans un espace intérieur de soupape (2) du boîtier (1), avec une tige creuse (8) reliée à la première tête de soupape (6), avec une tige de soupape (9) reliée à la deuxième tête de soupape (7) et disposée de manière à traverser la tige creuse (8), avec un premier siège de soupape (31) et un deuxième siège de soupape (34), avec un entraînement (16) conçu pour l'actionnement d'au moins une tête de soupape (6, 7), avec une ouverture de boîtier (11) tournée vers l'entraînement (16), avec un espace de fuite (19) formé dans le passage (17) dans une position de fermeture de la soupape à double siège, lequel est étanche par rapport à la deuxième tête de soupape (7), et la tige creuse (8) présentant un canal de fuite (20) créant une liaison fluidique entre l'espace de fuite (19) et une partie de boîtier (13), et une fente de nettoyage (39) avec une section transversale pouvant être formée entre la deuxième tête de soupape (7) et la paroi de passage (18), et le canal de fuite présentant une section transversale de canal plus grande que la section transversale, un contour d'embouchure (30) étant formé dans le passage (17), dans lequel une section (33) de la première tête de soupape (6) est au moins partiellement reçue dans la position de fermeture de la soupape à double siège, et la section (33) délimite une cavité (36) de la première tête de soupape (6), dans laquelle la deuxième tête de soupape (7) est au moins partiellement reçue dans une position d'ouverture du soupape à double siège, **caractérisée en ce que** l'ouverture de boîtier (11) est étanchéifiée avec une membrane (10) séparant la partie de boîtier (13) de l'espace intérieur de soupape (2).

2. Soupape à double siège selon la revendication 1, **caractérisée en ce qu'**une première fente d'étranglement (38) avec une première section transversale de fente peut être formée entre la première tête de soupape (6) et la paroi de passage (18) et **en ce que** la fente de nettoyage (39) est réalisée comme une deuxième fente d'étranglement avec une deuxième section transversale de fente et le canal de fuite (20) présente une section transversale de canal plus grande que la plus grande parmi la première et la deuxième section transversale de fente.

3. Soupape à double siège selon la revendication 1 ou 2, **caractérisée en ce que** la tige creuse (8) est logée dans un coussinet lisse (14) et un contour extérieur de la tige creuse (8) épouse la forme d'un contour intérieur du coussinet lisse (14), empêchant ainsi une rotation autour d'un axe de levage.

4. Soupape à double siège selon l'une des revendications précédentes, **caractérisée en ce qu'**un bord intérieur de la membrane (10) est maintenu entre la tige creuse (8) et un élément de maintien (24) vissé avec la tige creuse (8) et **en ce qu'**un contre-écrou (25) fixe l'élément de maintien (24).

5. Soupape à double siège selon l'une des revendications précédentes, **caractérisée en ce que** le premier siège de soupape (31) est moulé dans le contour d'embouchure (30).

6. Soupape à double siège selon l'une des revendications précédentes, **caractérisée en ce qu'**un premier dispositif d'étanchéité (32) coopérant avec la première tête de soupape (6) et le premier siège de soupape (31) est conçu de manière à assurer une étanchéité axiale.

7. Soupape à double siège selon l'une des revendications précédentes, **caractérisée en ce que** la section transversale de canal mesure au moins le triple de la plus grande parmi la première et la deuxième section transversale de fente.

8. Soupape à double siège selon l'une des revendications précédentes, **caractérisée en ce qu'**il est prévu un moyen de guidage (29) provoquant le centrage de la deuxième tête de soupape (7) par rapport à la première tête de soupape (6) et lequel est disposé dans la direction axiale entre la deuxième tête de soupape (7) et la membrane (10).

9. Soupape à double siège selon la revendication 8, **caractérisée en ce que** le moyen de guidage (29) est fixé à la tige de soupape (9) et disposé de manière à s'appuyer dans le canal de fuite (20).

10. Soupape à double siège selon la revendication 8 ou 9, **caractérisée en ce que** le moyen de guidage (29) présente un passage de fuite (45) avec une surface de passage correspondant au moins à une section transversale de canal la plus petite du canal de fuite (20).
